# EUROPEAN PATENT APPLICATION

(11) **EP 4 391 335 A1**
(43) Date of publication of application: **26.06.2024**
(21) Application number: 23215475.7
(22) Date of filing: 11.12.2023
(51) Int. Cl.: H02M 1/00, H02M 1/44, H02M 3/158

(54) **CONTROL DEVICE FOR A SWITCHING VOLTAGE REGULATOR HAVING IMPROVED CURRENT DETECTION AND SWITCHING VOLTAGE REGULATOR**

(30) Priority: 23.12.2022 IT 202200026799
(71) Applicant: STMicroelectronics International N.V., 1228 Plan-les-Ouates, Geneva (CH)
(72) Inventor: FLORIANI, Ivan, 20152 MILANO (IT); PELLEGRINI, Mauro Jonathan, 20091 BRESSO (MI) (IT); CANNAVACCIUOLO, Salvatore, 80010 VILLARICCA (NA) (IT)
(74) Representative: Studio Torta S.p.A.

(57) **Abstract**

A control device (55) for a switching voltage regulator (50) of the buck-boost type having a switching circuit (53). The control device is configured to perform a current-control of the switching circuit and is formed by a filter (90) and a loop control circuit (92, 94, 96). The filter is configured to be coupled to a resistive element (80) of the switching circuit and to provide a filtered signal (V_{F}) starting from a measurement signal (V_{S}) indicative of a current (I_{L2}, I_{L3}) flowing through the resistive element. The loop control circuit is configured to generate one or more switching control signals (PWM, H1, L1, H2, L2) to drive the switching circuit, as a function of the filtered signal (V_{F}). The filter is configured to receive a filter control signal (L1) indicative of an actual operating mode of the switching voltage regulator. The filter is variable as a function of the filter control signal.

## Description

### Technical field

The present invention relates to a control device for a switching voltage regulator having improved current detection and to a switching voltage regulator.

### Background

As known, a switching voltage regulator is capable of converting an input direct voltage (DC) into an output direct voltage using different operating schemes and may be obtained using different topologies, whereof one of the most common is the four-switch non-inverting topology.

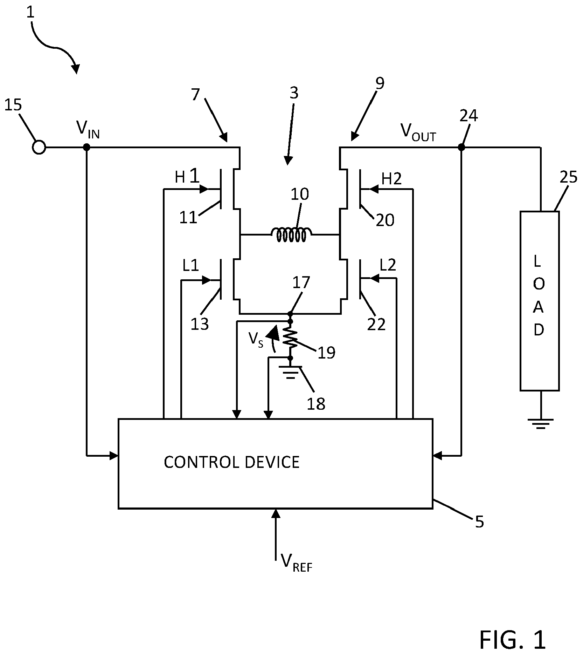

Figure 1 shows a switching voltage regulator 1 comprising a four-switch non-inverting switching circuit, hereinafter referred to as switching circuit 3, and a control device 5.

The switching circuit 3 is formed by a first half-bridge 7, a second half-bridge 9 and an inductor 10.

The first half-bridge 7 is formed by a first high-side switch 11 and a first low-side switch 13, here two N-MOS transistors, coupled in series between an input terminal 15 and a common node 17.

The common node 17 is coupled to a reference potential line (ground) 18 through a shunt resistor 19.

An input voltage V_{IN} is applied to the input terminal 15 with respect to ground 18.

The second half-bridge 9 is formed by a second high-side switch 20 and by a second low-side switch 22, also here two N-MOS transistors, coupled in series between an output node 24 and the common node 17.

An output voltage V_{OUT}, referred to ground 18, is present at the output node 24 and is applied to a load 25.

The inductor 10 is coupled between an intermediate node of the first half-bridge 7 and an intermediate node of the second half-bridge 9.

As a function of the ratio between the input voltage V_{IN} and the output voltage V_{OUT}, the switching voltage regulator 1 may work in one of three operating modes also known as "buck" if V_{IN}>V_{OUT}, "boost" if V_{IN}<V_{OUT} and "buck-boost" if V_{IN}≈V_{OUT}.

Depending on the operating mode, by suitably controlling the switching of the first and the second half-bridges 7, 9, it is in fact possible to keep the output voltage V_{OUT} at a reference voltage V_{REF}, chosen for example by a user according to a specific application, regardless of the value of the input voltage V_{IN}.

For this purpose, the control device 5 is coupled to the input node 15 and to the output node 24 and receives the reference voltage V_{REF}.

Furthermore, it is known to design the control device 5 so that the operation of the regulator 1 is current-controlled.

In this regard, the control device 5 is coupled to the shunt resistor 19 and detects the shunt voltage V_{S} which drops on the shunt resistor 19 and which is a function of the current flowing, in use, through the inductor 10.

The control device 5, starting from the input voltage V_{IN}, the output voltage V_{OUT}, the reference voltage V_{REF} and the shunt voltage V_{S}, generates four switch control signals H1, L1, H2, L2, which control the switching respectively of the first high-side switch 11, the first low-side switch 13, the second high-side switch 20 and the second low-side switch 22.

In the buck, boost or buck-boost modes, the switches 11, 13, 20 and 22 are driven so that the regulator 1 alternates between an ON-phase, wherein the inductor current increases, and an OFF-phase, wherein the inductor current decreases.

The control device 5 forms a closed-loop control circuit which modifies the switch control signals H1, L1, H2, L2 as a function of the shunt signal V_{S}, so that the output voltage V_{OUT} is kept equal to the reference voltage V_{REF}.

In detail, the control device 5 compares the shunt voltage V_{S} with a threshold that is a function of a difference between the output voltage V_{OUT} and the reference voltage V_{REF} and, in response, modifies the duration of the ON- and OFF-phases.

However, the Applicant has observed that the known regulators are subject to a high noise in the shunt voltage V_{S}. This noise modifies the behavior of the shunt voltage V_{S} with respect to the expected behavior, compromising the correct functioning of the control device 5.

In fact, the noise in the shunt voltage V_{S} may be such as to alter the comparison between the shunt voltage V_{S} and the aforementioned threshold. This may lead to the phenomenon of subharmonics generation in the current that flows, in use, through the inductor 10, especially for high values of the inductor current.

Furthermore, the phenomenon of subharmonics in the inductor current may also cause the generation of audio and electromagnetic noise and long-term instability of the same regulator.

According to one approach, the control device 5 comprises a filter having a fixed time constant which filters the shunt voltage V_{S}. However, this approach does not allow to solve the problems caused by the noise of the shunt voltage V_{S} and the resulting generation of subharmonics in the inductor current.

The aim of the present invention is to overcome the disadvantages of the prior art.

### Summary

According to the present invention there are provided a control device for a switching voltage regulator, a switching voltage regulator and a control method for a switching voltage regulator, as defined in the appended claims.

### Brief Description of the Drawings

For a better understanding of the present invention, some embodiments thereof are now described, purely by way of nonlimiting example, with reference to the attached drawings, wherein:
- figure 1 shows a circuit diagram of a switching voltage regulator;
- figure 2 shows a block diagram of a switching voltage regulator comprising a filter;
- figure 3 shows a detailed circuit diagram of a portion of the voltage regulator of figure 2 including the filter according to an embodiment; and
- figures 4-8 show circuit diagrams of the filter of figure 2 according to different embodiments.

### Description of Embodiments

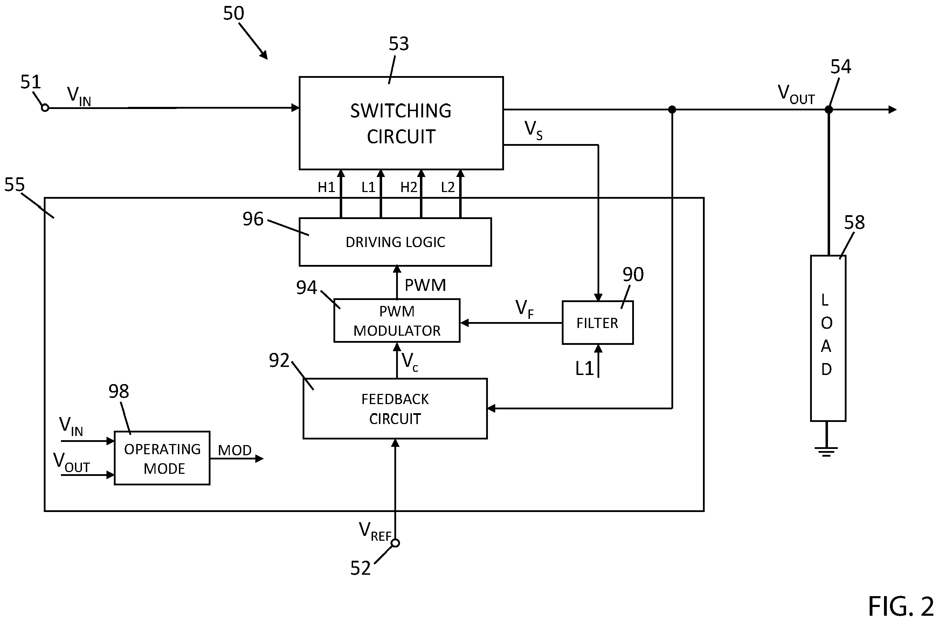

Figure 2 shows a block diagram of a switching voltage regulator 50, hereinafter also simply referred to as regulator 50, comprising a switching circuit 53 and a control device 55, which are mutually coupled.

The regulator 50 has an input node 51 from which it receives an input voltage V_{IN}, a reference node 52 from which it receives a nominal or reference voltage V_{REF}, and an output node 54 to which it provides an output voltage V_{OUT}. A load 58 is coupled to the output node 54 of the regulator 50.

In detail, the regulator 50 is a DC-DC converter of the buck-boost type, configured to generate the output voltage

V_{OUT}, starting from the input voltage V_{IN}, so that the output voltage V_{OUT} is equal to the reference voltage V_{REF}, which may be chosen by a user as a function of the specific application.

The switching circuit 53 and the control device 55 may be integrated in a same die or formed in different dies.

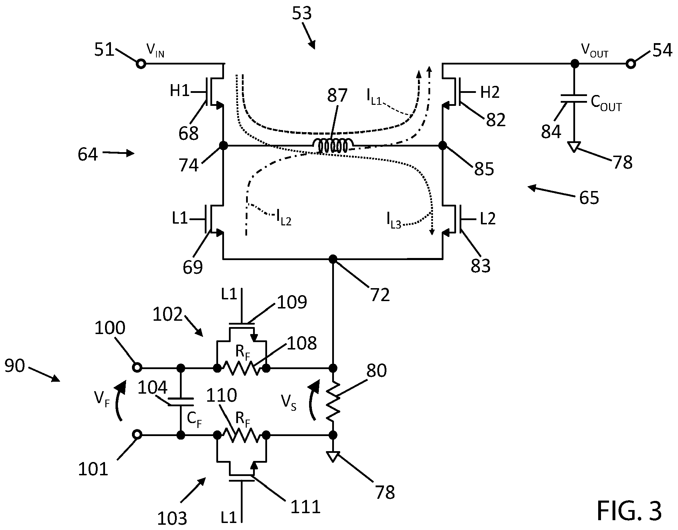

The switching circuit 53, shown in detail in figure 3, is here a four-switch non-inverting circuit, in particular configured to operate in buck, boost or buck-boost (or transition) mode, depending on whether the input voltage V_{IN} is respectively higher, lower than or approximately equal with respect to the output voltage V_{OUT} (or to the reference voltage V_{REF}).

In detail, the switching circuit 53 is formed by a first half-bridge 64 and by a second half-bridge 65.

The first half-bridge 64 is formed by a first high-side switch 68 and a first low-side switch 69, here two N-MOS transistors, coupled in series between the input node 51 and a common node 72.

In detail, the first high-side switch 68 is coupled between the input node 51 and an intermediate node 74 of the first half-bridge 64 and the first low-side switch 69 is coupled between the intermediate node 74 of the first half-bridge 64 and the common node 72.

The input node 51 is at the input voltage V_{IN} with respect to a reference potential line (ground) 78.

The common node 72 is coupled to ground 78 through a resistive element, here a shunt resistor 80, having resistance R_{S}.

The second half-bridge 65 is formed by a second high-side switch 82 and by a second low-side switch 83, also here two N-MOS transistors, coupled in series between the output node 54 and the common node 72.

In detail, the second high-side switch 82 is coupled between the output node 54 and an intermediate node 85 of the second half-bridge 65 and the second low-side switch 83 is coupled between the intermediate node 85 of the second half-bridge 65 and the common node 72.

The output node 54 provides the output voltage V_{OUT}, with respect to ground 78.

The switching circuit 53 also comprises an inductor 87 having inductance L and coupled between the intermediate node 74 of the first half-bridge 64 and the intermediate node 85 of the second half-bridge 65.

The first high-side switch 68, the first low-side switch 69, the second high-side switch 82, and the second low-side switch 83 are each controlled by a respective switch control signal H1, L1, H2, L2.

The switching circuit 53 also comprises an output capacitor 84 having capacitance C_{OUT}, coupled between the output node 54 and the ground 78.

The control device 55 is configured to perform a current-control of the switching circuit 53.

The control device 55 is coupled to the output node 54 and the reference node 52.

Furthermore, the control device 55 is coupled to the shunt resistor 80 so as to detect a measurement or shunt voltage V_{S} indicative of the inductor current flowing, in use, through the shunt resistor 80.

With reference to figure 2, the control device 55 comprises a filter 90, described in detail below, which receives the shunt voltage V_{S} and generates a filtered signal, here a filtered voltage V_{F}; and a loop control circuit, comprising a feedback circuit 92, a PWM modulator 94, and a driving logic circuit 96, which provides the switch control signals H1, L1, H2, L2 as a function of the filtered signal V_{F}, so that the output voltage V_{OUT} is kept equal to the reference voltage V_{REF}.

In detail, the feedback circuit 92 is coupled to the output node 54 and to the reference node 52 and generates a control signal, here a control voltage V_{C}.

The PWM modulator 94 receives the control voltage V_{C} and the filtered voltage V_{F} and provides in response a PWM modulated signal.

The driving logic circuit 96 provides the switch control signals H1, L1, H2, L2 starting from the PWM modulated signal.

In the embodiment shown, the control device 55 also comprises a mode determination module 98 which receives the input voltage V_{IN} and the output voltage V_{OUT} and provides in response a mode signal MOD which indicates whether the regulator 50 is in the buck, boost or buck-boost operating mode.

For example, the mode determination module 98 may compare the difference between the input voltage V_{IN} and the output voltage V_{OUT} with a first threshold Vₜₕ₁ and a second threshold Vₜₕ₂.

For example, if V_{IN} < V_{OUT} - Vₜₕ₁ then the regulator 50 is in boost mode. If V_{IN} > V_{OUT} + Vₜₕ₂ then the regulator 50 is in buck mode. If V_{OUT} - Vₜₕ₁ < V_{IN} < V_{OUT} + Vₜₕ₂ then the regulator 50 is in buck-boost or transition mode.

The feedback circuit 92, the PWM modulator 94 and the driving logic circuit 96 may receive the mode signal MOD, such that the respective operation is a function of the operating mode of the regulator 50, in a per se known manner.

The feedback circuit 92 detects an error signal indicative of a difference between the output voltage V_{OUT} and the reference voltage V_{REF} and provides in response the control voltage V_{C}.

For example, the feedback circuit 92 may comprise an error amplifier, such as an operational transconductance amplifier (OTA) which receives and amplifies the error signal, and a filtering network coupled to the output of the OTA.

According to an embodiment, the control voltage V_{C} may be indicative of further current-control parameters, for example offset, slope, etc., of a per se known type, as a function of the specific control mode of the regulator 50, for example peak or valley current-control.

The PWM modulator 94 compares the filtered voltage V_{F}, indicative of the current flowing in the switching circuit 53, with the control voltage V_{C}, indicative of the difference between the output voltage V_{OUT} and the reference voltage V_{REF}, and provides in response the PWM modulated signal.

The PWM modulated signal has a fixed period and a duty-cycle which is variable at each cycle (or period) of the PWM modulated signal.

In detail, in each cycle of the PWM modulated signal, the PWM modulated signal has a first semiperiod of duration T_{ON} and a second semiperiod of duration T_{OFF} which define an ON-phase and, respectively, an OFF-phase of the regulator 50. In the ON-phase, the current flowing through the inductor 87 has an increasing trend over time. In the OFF-phase, the current flowing through the inductor 87 has a decreasing trend over time.

The PWM modulator 94 modifies, in use, the duty cycle of the PWM modulated signal as a function of the comparison between the filtered voltage V_{F} and the control voltage V_{C}.

The driving logic circuit 96 provides, in a per se known manner, the switch control signals H1, L1, H2, L2 starting from the PWM modulated signal, as a function of the actual operating mode of the regulator 50.

In practice, the feedback circuit 92, the PWM modulator 94 and the driving logic circuit 96 form a closed loop control circuit.

With reference to figures 2 and 3, the filter 90 receives a filter control signal which is indicative of the actual operating mode of the regulator 50; in particular here the filter 90 receives the switch control signal L1 which controls the first low-side switch 69.

The filter 90 is therefore a filter variable as a function of the actual operating mode of the regulator 50.

In detail, the filter 90 is a low-pass filter having a time constant variable as a function of the actual operating mode of the regulator 50.

The filter 90 comprises a first input node coupled to a terminal of the shunt resistor 80, here coinciding with the common node 72 and therefore indicated by the same reference number; a second input node coupled to a second terminal of the shunt resistor 80, here coinciding with the ground 78 and therefore indicated by the same reference number; and a first and a second output node 100, 101 having the filtered voltage V_{F} dropping therebetween.

In this embodiment, the filter 90 comprises a first resistive element 102 coupled between the first input node 72 and the first output node 100 of the filter 90; a second resistive element 103 coupled between the second input node 78 and the second output node 101 of the filter 90; and a capacitive element, here a capacitor 104, having a capacitance C_{F} and coupled between the first and the second output nodes 100, 101 of the filter 90.

The capacitance C_{F} may be chosen as a function of the specific application.

The capacitance C_{F} may be, for example, on the order of a few nF if the capacitor 104 is of discrete type or of a few tens of pF if the capacitor 104 is integrated in the control device 55.

The first resistive element 102 has a variable resistance as a function of the switch control signal L1.

The first resistive element 102 is a parallel circuit comprising a resistor 108 having resistance R_{F} and a switch 109, here an NMOS transistor having an on-state resistance R_{ds,ON}, lower than the resistance R_{F}.

The resistances R_{F} and R_{ds,ON} may be chosen as a function of the specific application.

For example, the resistance R_{F} may be on the order of a few Ohms and the on-state resistance R_{ds,ON} may be of a few fractions of an Ohm, if the resistor 108 and the switch 109 are of discrete type.

For example, the resistance R_{F} may be on the order of a few kOhms, if the resistor 108 is integrated into the control device 55.

The use of higher values of the resistance R_{F} and lower values of the capacitance C_{F} in the case where the capacitor 104 and the resistor 108 are integrated in the control device 55, with respect to the case where the capacitor 104 and the resistor 108 are discrete elements, allows to obtain a low die area occupancy of the filter 90.

The second resistive element 103 has a resistance variable as a function of the signal L1.

The second resistive element 103 is a parallel circuit comprising a resistor 110 having resistance R_{F} and a switch 111, here an NMOS transistor, having an on-state resistance R_{ds,ON} lower than the resistance R_{F}.

The switches 109, 111 are controlled by the switch control signal L1.

What has been described above for the resistor 108 and the switch 109 may also be applied to the resistor 110 and the switch 111.

In particular, in this embodiment, the first and the second resistive elements 102, 103 are equal to each other; however, they may be different from each other according to the specific application.

In use, when the regulator 50 is in the boost mode, the driving logic circuit 96 provides the switch control signal H1 so as to keep the first high-side switch 68 closed (i.e., so as to keep the corresponding transistor 68 on, thus allowing a flow of current), and the switch control signal L1 so as to keep the first low-side switch 69 open (i.e., so as to keep the corresponding transistor 69 off, thus blocking a flow of current).

At the same time, in the boost mode, the driving logic circuit 96 provides the switch signals H2, L2 so as to control the alternating opening of the second high-side switch 82 and of the second low-side switch 83.

In detail, in each cycle of the PWM modulated signal, in the ON-phase of the boost mode, a current (indicated by a dotted arrow I_{L3} in figure 3) may flow through the first high-side switch 68, the inductor 87, the second low-side switch 83 and the shunt resistor 80. In the OFF-phase, a current (indicated by a dashed arrow I_{L1} in figure 3) may flow through the first high-side switch 68, the inductor 87 and the second high-side switch 82.

In the boost mode, the switch control signal L1 keeps open, in addition to the first low-side switch 69, also the switches 109, 111 of the filter 90 both in the ON-phase and in the OFF-phase.

Consequently, the resistance of the first and the second resistive elements 102, 103 is given by the values of resistance R_{F} of the resistors 108, 110.

The filter 90 therefore has, in the boost mode, a time constant τ_{bo} which is a function of the resistance R_{F} and the capacitance C_{F}; in particular, in the embodiment shown, the time constant τ_{bo} is given by 2·C_{F}·R_{F} since the filter 90 is a differential filter.

When the regulator 50 is in the buck mode, the driving logic circuit 96 provides the switch control signal H2 so as to keep the second high-side switch 82 closed, and the switch control signal L2 so as to keep the second low-side switch 83 open.

The driving logic circuit 96 provides the switch signals H1, L1 so as to control the alternating opening of the first high-side switch 68 and the first low-side switch 69.

In detail, in each cycle of the PWM modulated signal, in the ON-phase of the buck mode, a current (indicated by the dashed arrow I_{L1} in figure 3) may flow through the first high-side switch 68, the inductor 87 and the second high-side switch 82. In the OFF-phase, a current (indicated by a dash-dot arrow I_{L2} in figure 3) may flow through the second high-side switch 82, the inductor 87, the first low-side switch 69 and the shunt resistor 80.

In practice, in the OFF-phase of the buck mode, when the inductor current I_{L2} flows through the shunt resistor 80, the switch control signal L1 keeps the switches 109, 111 of the filter 90 closed.

Consequently, the resistance of the first and the second resistive elements 102, 103 is given by the resistance R_{ds,ON} of the switches 109, 111.

The resistance R_{ds,on} is lower than the resistance R_{F}.

Consequently, in buck mode, the filter 90 has a time constant τ_{bu} given by 2·C_{F}·R_{ds,on}, and therefore lower than the time constant τ_{bo} of the boost mode.

In the buck-boost or transition mode, the driving logic circuit 96 controls the switches H1, L1, H2, L2 so as to alternate the current paths indicated in figure 3 by the arrows I_{L1}, I_{L2}, I_{L3}, in a per se known manner.

In practice, the control device 55 alternates a period of the PWM modulated signal wherein the regulator 50 is in the boost mode to a subsequent period of the PWM modulated signal wherein the regulator 50 is in the buck mode.

In practice, the filter 90 is a filter, here of differential type, having a variable time constant which depends on the capacitance C_{F} and on the resistance R_{F} or R_{ds,on}, as a function of the value of the switch control signal L1.

In addition to what has been discussed above for the values C_{F}, R_{F} and R_{ds,on}, these may be chosen during the design step as a function of the specific values of the time constants τ_{bo}, τ_{bu} desired.

For example, the values C_{F}, R_{F} and R_{ds,on} may be chosen so that the time constants τ_{bo}, τ_{bu} are lower than a blanking time of the regulator 50, wherein the blanking time is chosen as a function of the on and/or off transients of the switches 68, 69, 82, 83. In particular, the values C_{F}, R_{F} and R_{ds,on} may be chosen so that the blanking time is greater than or equal to, for example, 3·τ_{bo} and 3·τ_{bu} (or 4·τ_{bo} and 4·τ_{bu}).

The Applicant has observed that the possibility of automatically adjusting the time constant of the filter 90 as a function of the actual operating mode of the regulator 50 allows to obtain optimal operation of the regulator 50 in any operating condition, for example independently of the input voltage V_{IN} and of the load current flowing through the load 58.

In fact, the filter 90 causes any noise in the shunt voltage V_{S} to be suitably filtered in any operating mode of the regulator 50. In practice, the filter 90 reduces the effects of this noise on the filtered voltage V_{F}.

Since the loop control circuit formed by the feedback circuit 92, the PWM modulator 94 and the driving logic circuit 96 generates the switching control signals H1, L1, H2, L2 as a function of the filtered signal V_{F}, the noise of the shunt voltage V_{S} does not affect the control of the switching circuit 53.

This allows to avoid, or in any case to reduce, the generation of subharmonics or other deviations of the inductor current.

The filter 90 therefore allows an improved operation of the regulator 50.

Furthermore, the possibility of modifying the time constant of the filter 90 as a function the actual operating mode of the regulator 50 allows to compensate for any parasitic capacitances or inductances of the regulator 50.

In particular, the Applicant has observed that the fact that the filter 90 may have, in the boost mode, a greater time constant than in the buck mode allows to adequately filter the noise in the shunt voltage V_{S} and therefore to reduce and/or eliminate the generation of subharmonics in the inductor current both in boost mode and in the buck mode, even in the presence of high values, for example even higher than 20 A, of the load current.

In fact, the Applicant has observed that the inductor current may reach, in the boost mode, higher values than in the buck mode, for example if compared in case of equal load 58.

High values of the inductor current accentuate the effects of any parasitic capacitances and/or inductances of the switching circuit 53, for example formed by the shunt resistor 80 and/or by the current paths between the switches 69, 83 and the ground 78. Consequently, the shunt voltage V_{S} may be subject to higher noise values in boost mode than in the buck mode.

A high time constant in boost mode allows to filter out this greater noise.

At the same time, the Applicant has verified that this high time constant may compromise the operation of the regulator 50 in buck mode.

Consequently, the use of the filter 90 having a greater time constant in boost mode than in the buck mode allows both to filter the noise of the shunt voltage V_{S} and to ensure correct operation of the regulator 50 in both boost and buck modes, also in the presence of high inductor currents.

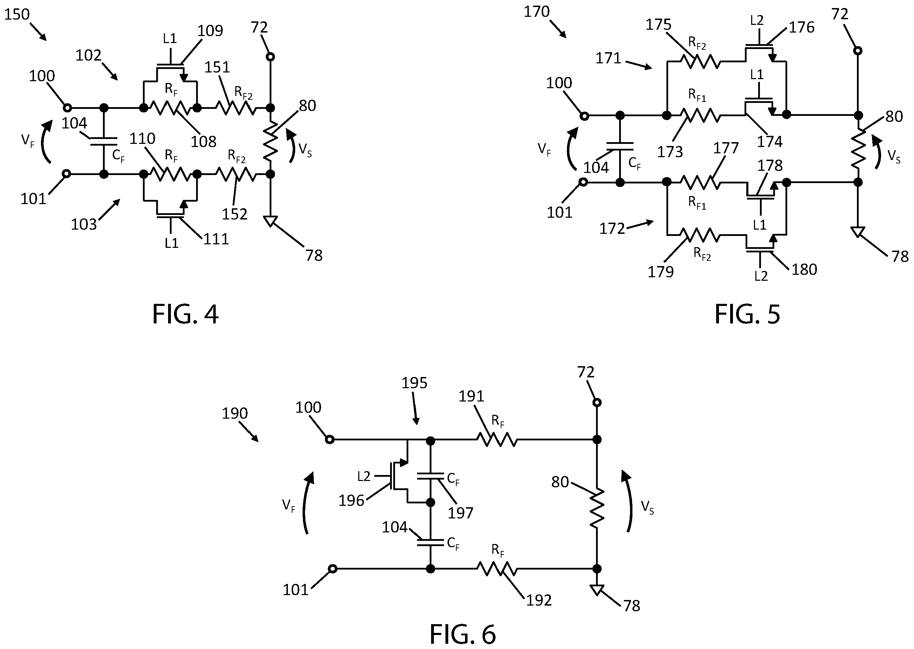

Figure 4 shows a different embodiment of the filter, here indicated by 150, coupled to the shunt resistor 80 and providing the filtered voltage V_{F}. The filter 150 has a general structure similar to that of the filter 90 of figure 3; consequently, elements in common are indicated by the same reference numbers and are not further described.

The filter 150 comprises, in addition to what has been described for the filter 90, also a third and a fourth resistive element 151, 152.

The third resistive element 151, here a resistor of resistance R_{F2}, is arranged in series with the first resistive element 102, here between the resistor 108 and the first input node 72 of the filter 150.

The fourth resistive element 152, here a resistor of resistance R_{F2}, is arranged in series with the second resistive element 103, here between the resistor 110 and the second input node 78 of the filter 150.

In practice, in this embodiment, when the switch control signal L1 keeps the switches 109, 111 open, for example in boost mode, the resistance of the filter 150 is given by R_{F}+R_{F2}.

When the switch control signal L1 keeps the switches 109, 111 closed, for example in buck mode, the resistance of the filter 150 is given by R_{ds,ON}+R_{F2}.

Consequently, also in this embodiment, the time constant of the filter 150 depends on the actual operating mode of the regulator 50 and is greater in boost mode than in the buck mode.

In this embodiment, the resistance of the filter 150 may be determined by the resistors 151, 152 and not by the on-state resistance R_{DS,on} of the switches 109, 111, if the resistance R_{F2} is greater than the on-state resistance R_{DS,on}. Consequently, the time constant of the filter 150 may be independent of any variations in the on-state resistance R_{DS,on} of the switches 109, 111.

Figure 5 shows a different embodiment of the filter, here indicated by 170, coupled to the shunt resistor 80 and providing the filtered voltage V_{F}. The filter 170 has a general structure similar to that of the filter 90 of figure 3; consequently, elements in common are indicated by the same reference numbers and are not further described.

The filter 170 here again comprises a first and a second resistive element, here indicated by 171 and 172, and the capacitive element 104.

The first resistive element 171 is a parallel circuit having a first branch formed by a series circuit comprising a resistor 173 of resistance R_{F1} and a switch, here an NMOS transistor 174; and a second branch formed by a series circuit comprising a resistor 175 of resistance R_{F2}, and a switch, here an NMOS transistor 176.

The switch 174 is controlled by the switch control signal L1. The switch 176 is controlled by the switch control signal L2.

The second resistive element 172 is a parallel circuit having a first branch formed by a series circuit comprising a resistor 177 of resistance R_{F1} and a switch, here an NMOS transistor 178; and a second branch formed by a series circuit comprising a resistor 179 of resistance R_{F2}, and a switch, here an NMOS transistor 180.

The switch 178 is controlled by the switch control signal L1. The switch 180 is controlled by the switch control signal L2.

In this embodiment, the resistance R_{F2} is greater than the resistance R_{F1}.

Consequently, in the buck mode, when the switches 174 and 178 are closed and the switches 176, 180 are open, the time constant of the filter 170 is given by C_{F}·(R_{F1}+R_{ds,ON}).

In the boost mode, when the switches 174 and 178 are open and the switches 176, 180 are closed, the time constant of the filter 170 is given by C_{F}·(R_{F2}+R_{ds,ON}).

Since the resistance R_{F2} is greater than resistance R_{F1}, the filter 170 may have a greater time constant in the boost mode than in the buck mode.

Figure 6 shows a further embodiment of the filter, here indicated by 190, coupled to the shunt resistor 80 and providing the filtered voltage V_{F}.

In the filter 190, the first and the second resistive elements are each formed by a respective resistor 191, 192 having a fixed value of resistance R_{F}.

The capacitive element, here indicated by 195, is a series circuit coupled between the first and the second output nodes 100, 101 of the filter 190 and comprising the capacitor 104 and a parallel circuit formed by a switch 196, here an NMOS transistor, and a capacitor 197, here having capacitance C_{F}.

The switch 196 is controlled by the switch control signal L2 that controls the second low-side switch 83.

In the buck mode, the switch control signal L2 keeps the second low-side switch 83 open. Consequently, the capacitance of the capacitive element 195 is given by the series of capacitors 104, 197.

In the boost mode, particularly in the ON-phase wherein the inductor current flows in the shunt resistor 80, the switch control signal L2 keeps the second low-side switch 83 closed (current I_{L3} in figure 3). Consequently, the switch 196 is also closed. The capacitance of the capacitive element 195 is therefore given by the capacitor 104.

In practice, even in this embodiment, the time constant of the filter 190 may be greater in the boost mode than in the buck mode.

Finally, it is clear that modifications and variations may be made to the regulator 50 described and illustrated herein without thereby departing from the scope of the present invention, as defined in the attached claims.

The filter coupled to the shunt resistor 80 may have a circuit diagram different from what has been described with reference to figures 3-6.

For example, the filter may be a common mode filter.

For example, with reference to figure 6, the capacitive element may be a parallel circuit comprising a first branch having a fixed capacitor and a second branch having a series circuit comprising a switch and a fixed capacitor. In this case, the switch may be controlled by the switch control signal L1.

The filter may be of a different type, for example a bandpass filter wherein the time constants which determine the pass-band of the same filter are variable as a function of the actual operating mode of the regulator 50.

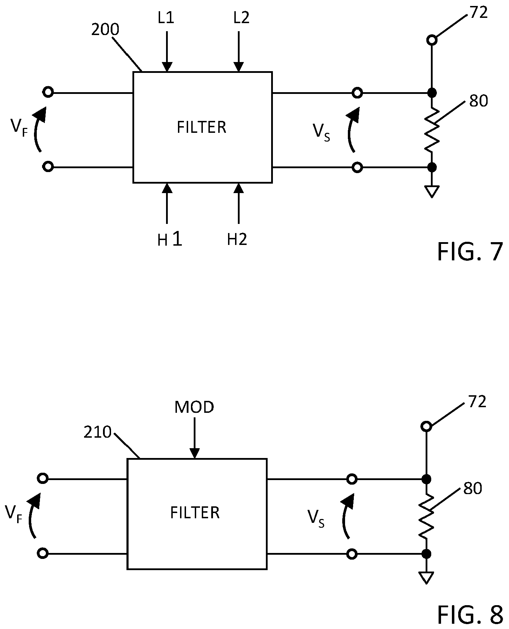

For example, as shown in figure 7, the filter, here indicated by 200, may receive all the switch control signals H1, L1, H2, L2 and have a circuit diagram such as to make the time constant variable as a function of all the signals H1, L1, H2, L2, in particular such that the time constant of the filter 200 is greater in the boost mode than in the buck mode.

For example, as shown in figure 8, the filter, here indicated by 210, may be controlled by the mode signal MOD generated by the mode determination module 98 of figure 1. In detail, the time constant of the filter 200 is a function of the mode signal MOD, in particular such that the time constant of the filter 200 is greater in the boost mode than in the buck mode.

Alternatively, the filter may be controlled by another signal internal to the control device 55, for example generated by a specific circuit, indicative of the actual operating mode of the regulator 50.

For example, the shunt resistor 80 may be a resistive element different from a discrete resistor, for example it may be obtained starting from an integrated resistance.

For example, the shunt resistor 80 may be arranged in a different position in the switching circuit 53 with respect to what has been shown in figure 3, either in the high side or in the low side of the switching circuit 53, such as in series with the inductor 87 between the intermediate nodes 74, 85 or between the second high-side switch 82 and the output node 54. In this manner, the control device 55 may be configured to perform a current-control that is different from the valley-type one in buck mode and the peak-type one in boost mode. For example, if the shunt resistor 80 is arranged in the high side of the switching circuit 53, for example between the second high-side switch 82 and the output node 54, the control device 55 may perform a valley-type current-control in boost mode and a peak-type current-control in buck mode.

For example, the filters 90, 150, 170, 190, 200 and 210 may be formed by discrete circuit elements, for example mounted on a printed circuit board (PCB) on which the switching circuit 53 is formed, or by circuit elements integrated in the same die wherein the control device 55 is formed.

The filter 90, 150, 170, 190, 200, 210, the feedback circuit 92, the PWM modulator 94 and the control logic circuit 96 may be modules that are implemented as analog, digital or mixed-signal circuits, according to the specific application.

The switching circuit of the present regulator may be of a type other than what shown and described above; for example, it may be a switching circuit of the inverting or non-inverting type and having a number of drivable switches other than four.

In general, as it emerges from what described above, the filter, which is variable as a function of the actual operating mode of the converter, may be used in various DC-DC converters having a shunt current measurement chain.

The embodiments described and illustrated above may be combined to form further solutions.

## Claims

1. A control device (55) for a switching voltage regulator (50) of the buck-boost type comprising a switching circuit (53), the control device being configured to perform a current-control of the switching circuit, wherein the control device comprises:
a filter (90; 150; 170; 200; 210) configured to be coupled to a resistive element (80) of the switching circuit and to provide a filtered signal (V_{F}) starting from a measurement signal (V_{S}) indicative of a current (I_{L2}, I_{L3}) flowing through the resistive element; and
a loop control circuit (92, 94, 96) configured to generate one or more switching control signals (PWM, H1, L1, H2, L2) to drive the switching circuit, as a function of the filtered signal (V_{F}),
wherein the filter is configured to receive a filter control signal (L1; L1, L2; MOD) indicative of an actual operating mode of the switching voltage regulator, the filter being variable as a function of the filter control signal.

2. The control device according to the preceding claim, wherein the filter (90; 150; 170; 200; 210) has a time constant that is variable as a function of the filter control signal.

3. The control device according to claim 1 or 2, wherein the filter is a low-pass filter.

4. The control device according to any of the preceding claims, wherein the filter is configured to have a first time constant (τ_{bu}) when the switching voltage regulator is in the buck operating mode and a second time constant (τ_{bo}) when the switching voltage regulator is in the boost operating mode, the second time constant being greater than the first time constant.

5. The control device according to any of the preceding claims, wherein the filter control signal is one of the switching control signals (L1; L2).

6. The control device according to any of the preceding claims, wherein the filter (90; 150; 170) comprises at least one resistive element (102, 103; 171, 172) having a resistance variable as a function of the filter control signal.

7. The control device according to the preceding claim, wherein the resistive element comprises a parallel circuit including a resistor (108, 110) and a switch (109, 111), the switch being controlled by the filter control signal.

8. The control device according to claim 6 or 7, wherein the filter control signal is a first filter control signal (L1), the filter (170) being configured to further receive a second filter control signal (L2) indicative of the actual operating mode of the voltage regulator and different from the first filter control signal, the resistive element (171, 172) of the filter comprising a parallel circuit having a first and a second branch each comprising a respective resistor (173, 175) and a respective switch (174, 176) connected to each other in series, the switch (174) of the first branch being controlled by the first filter control signal and the switch (176) of the second branch being controlled by the second filter control signal.

9. The control device according to any of the preceding claims, wherein the filter (190) comprises at least one capacitive element (195) having a capacitance variable as a function of the filter control signal (L2).

10. The control device according to any of the preceding claims, configured to perform a peak-type current-control when the switching voltage regulator is in boost mode and to perform a valley-type current-control when the switching voltage regulator is in buck mode.

11. The control device according to any of the preceding claims, wherein the loop control circuit comprises a feedback circuit (92) configured to generate a control signal (V_{C}) as a function of a difference between an output voltage (V_{OUT}) and a reference voltage (V_{REF}); a PWM modulator (94) configured to receive the filtered signal (V_{F}) and the control signal (V_{C}) and, in response, generate a modulated signal (PWM); and a driving logic circuit (96) configured to provide the switching control signals (H1, L1, H2, L2) as a function of the modulated signal.

12. The control device according to any of the preceding claims, for a switching voltage regulator of the buck-boost type, wherein the switching circuit is of the non-inverting type and/or comprises at least four switches drivable by the one or more switching control signals.

13. A switching voltage regulator (50) of the buck-boost type comprising the control device according to any of the preceding claims and the switching circuit (53), the switching circuit including a first half-bridge (64), a second half-bridge (65) and an inductor (87), the first half-bridge comprising a first and a second switch (68, 69) coupled in series between an input node (51) and a common reference potential node (72, 78), the second half-bridge including a third and a fourth switch (82, 83) coupled in series between an output node (54) and the common reference potential node, the inductor being coupled between intermediate nodes (74, 85) of the first and the second half-bridges, the switching circuit further comprising a resistive element (80), the filter (90; 150; 170; 200; 210) being coupled to the resistive element, wherein the first, the second, the third and the fourth switches are controlled respectively by a first, a second, a third and a fourth switching control signals (H1, L1, H2, L2) generated by the loop control circuit (92, 94, 96).

14. The switching voltage regulator according to the preceding claim, wherein the filter (90; 150; 170; 200; 210) comprises electrical elements integrated in the control device (55) or discrete electrical elements.

15. A control method for a switching voltage regulator (50) of the buck-boost type comprising a switching circuit (53) and a control device (55) configured to perform a current-control of the switching circuit, the control method comprising:
filtering, by a filter (90; 150; 170; 200; 210) of the control device, a measurement signal (V_{S}) indicative of a current (I_{L2}, I_{L3}) that flows through a resistive element (80) of the switching circuit, thereby generating in response a filtered signal (V_{F}); and
generating, by a loop control circuit (92, 94, 96) of the control device, one or more switching control signals (PWM, H1, L1, H2, L2) to drive the switching circuit, as a function of the filtered signal (V_{F}),
wherein the measurement signal is filtered as a function of an actual operating mode of the voltage regulator.
